# EUROPÄISCHE PATENTANMELDUNG

(11) **EP 4 293 447 A1**
(43) Veröffentlichungstag der Anmeldung: **20.12.2023**
(21) Anmeldenummer: 22178956.3
(22) Anmeldetag: 14.06.2022
(51) Int. Cl.: G05B 19/404, G05B 19/416

(54) **KOMPENSATION DER WERKZEUGABDRÄNGUNG DURCH DYNAMISCHES ANPASSEN DER WERKZEUGGEOMETRIE**

(71) Anmelder: Siemens Aktiengesellschaft, 80333 München (DE)
(72) Erfinder: Pitz, Thomas, 71277 Rutesheim (DE); Spielmann, Ralf, 70569 Stuttgart (DE)
(74) Vertreter: Siemens Patent Attorneys

(57) **Zusammenfassung**

Eine numerische Steuerung (4) einer Werkzeugmaschine nimmt ein Teileprogramm (7) entgegen, das eine Bahn (8) festlegt, entlang derer ein Werkstück (2) materialabtragend bearbeitet werden soll. Sie ermittelt für eine Anzahl von lagegeregelten Achsen (1) der Werkzeugmaschine, mittels derer ein Bearbeitungswerkzeug (3) der Werkzeugmaschine relativ zum Werkstück (1) lagegeregelt verfahren wird, unter Verwertung des Teileprogramms (7) Steuerbefehle (Ci) und steuert die lagegeregelten Achsen (1) entsprechend den ermittelten Steuerbefehlen (Ci) an. Die numerische Steuerung (4) ermittelt die Steuerbefehle (Ci) derart, dass das Werkstück (2) entlang der durch das Teileprogramm (7) festgelegten Bahn (8) materialabtragend bearbeitet wird. Sie nimmt während der Bearbeitung des Werkstücks (2) durch das Bearbeitungswerkzeug (3) in Echtzeit für eine während der Bearbeitung des Werkstücks (2) durch das Bearbeitungswerkzeug (3) von dem Werkstück (2) auf das Bearbeitungswerkzeug (3) ausgeübte Bearbeitungskraft (F) charakteristische Istgrößen (I) entgegen. Die numerische Steuerung (4) berücksichtigt bei der Ermittlung der Steuerbefehle (Ci) eine geometrische Abmessung (g) des Bearbeitungswerkzeugs (3) und die Bearbeitungskraft (F). Die Berücksichtigung der Bearbeitungskraft (F) erfolgt dadurch, dass die geometrische Abmessung (g) des Bearbeitungswerkzeugs (3) während der Bearbeitung dynamisch und in Echtzeit in Abhängigkeit von der Bearbeitungskraft (F) variiert wird.

## Beschreibung

Die vorliegende Erfindung geht aus von einem Betriebsverfahren für eine Werkzeugmaschine,
- wobei eine numerische Steuerung der Werkzeugmaschine ein Teileprogramm entgegennimmt, das eine Bahn festlegt, entlang derer ein Werkstück materialabtragend bearbeitet werden soll,
- wobei die numerische Steuerung für eine Anzahl von lagegeregelten Achsen der Werkzeugmaschine, mittels derer ein Bearbeitungswerkzeug der Werkzeugmaschine relativ zum Werkstück lagegeregelt verfahren wird, unter Verwertung des Teileprogramms Steuerbefehle ermittelt und die lagegeregelten Achsen entsprechend den ermittelten Steuerbefehlen ansteuert,
- wobei die numerische Steuerung die Steuerbefehle derart ermittelt, dass das Werkstück entlang der durch das Teileprogramm festgelegten Bahn materialabtragend bearbeitet wird,
- wobei die numerische Steuerung während der Bearbeitung des Werkstücks durch das Bearbeitungswerkzeug in Echtzeit eine Anzahl von für eine während der Bearbeitung des Werkstücks durch das Bearbeitungswerkzeug von dem Werkstück auf das Bearbeitungswerkzeug ausgeübte Bearbeitungskraft charakteristischen Istgrößen entgegennimmt,
- wobei die numerische Steuerung bei der Ermittlung der Steuerbefehle eine geometrische Abmessung des Bearbeitungswerkzeugs und die Bearbeitungskraft berücksichtigt.

Die vorliegende Erfindung geht weiterhin aus von einem Steuerprogramm für eine numerische Steuerung, wobei das Steuerprogramm Maschinencode umfasst, dessen Abarbeitung durch die numerische Steuerung bewirkt, dass die numerische Steuerung ein derartiges Betriebsverfahren ausführt.

Die vorliegende Erfindung geht weiterhin aus von einer numerischen Steuerung, die mit einem derartigen Steuerprogramm programmiert ist, so dass sie im Betrieb ein derartiges Betriebsverfahren ausführt.

Die vorliegende Erfindung geht weiterhin aus von einer Werkzeugmaschine,
- wobei die Werkzeugmaschine eine numerische Steuerung aufweist, von der ein Teileprogramm entgegennehmbar ist, das eine Bahn festlegt, entlang derer ein Werkstück materialabtragend bearbeitet werden soll,
- wobei die Werkzeugmaschine eine Anzahl von lagegeregelten Achsen aufweist, mittels derer ein Bearbeitungswerkzeug der Werkzeugmaschine relativ zum Werkstück lagegeregelt verfahrbar ist,
- wobei die numerische Steuerung mit den lagegeregelten Achsen zur Vorgabe von Steuerbefehlen an die lagegeregelten Achsen verbunden ist,
- wobei die Werkzeugmaschine eine Einrichtung aufweist, von der während der Bearbeitung des Werkstücks eine Anzahl von für eine während der Bearbeitung des Werkstücks auf das Bearbeitungswerkzeug wirkende Bearbeitungskraft charakteristischen Istgrößen erfassbar oder ermittelbar ist,
- wobei die numerische Steuerung mit der Einrichtung zur Entgegennahme der Istgrößen verbunden ist.

Ein derartiges Betriebsverfahren, die entsprechende numerische Steuerung, die zugehörige Werkzeugmaschine und damit im Ergebnis auch das Steuerprogramm sind beispielsweise aus der DE 10 2017 206 931 A1 bzw. der korrespondierenden US 2018/0 307 200 A1 bekannt.

Bei der DE 10 2017 206 931 A1 wird zunächst in einem Lernschnitt ein Testwerkstück mit bekannter Geometrie im Gleichlauf mittels eines Fräsers (Bearbeitungswerkzeug der DE 10 2017 206 931 A1) bearbeitet. Im Rahmen des Lernschnittes wird ein Zusammenhang zwischen dem Drehmoment eines Spindelantriebs für den Fräser, das im Wesentlichen proportional zur Bearbeitungskraft ist, und einer dadurch bewirkten Abdrängung des Fräsers ermittelt. Dieser Zusammenhang wird in der numerischen Steuerung hinterlegt und kann dadurch bei der Bearbeitung späterer Werkstücke im Gleichlauf berücksichtigt werden.

Bei der DE 10 2017 206 931 A1 wird der Zusammenhang zwischen dem Drehmoment und der Abdrängung in Form von Achssteifigkeiten ermittelt. Diese Ermittlung erfolgt individuell für die einzelnen Achsen. Die Berücksichtigung erfolgt dadurch, dass die Lagesollwerte für die Achsen in Abhängigkeit von der jeweiligen Achssteifigkeit und der auftretenden Abdrängkraft (Bearbeitungskraft der DE 10 2017 206 931 A1) korrigiert werden.

Die Lehre der DE 10 2017 206 931 A1 führt gegenüber Vorgehensweisen, bei denen keine Berücksichtigung der Bearbeitungskraft erfolgt, zu deutlich verbesserten Ergebnissen. Sie ist jedoch rechentechnisch sehr komplex und bei komplexeren Bearbeitungsvorgängen auch nicht einfach anzuwenden.

Die Aufgabe der vorliegenden Erfindung besteht darin, Möglichkeiten zu schaffen, mittels derer die bei der Bearbeitung des Werkstücks durch das Bearbeitungswerkzeug auftretenden Bearbeitungskräfte auf einfachere Weise berücksichtigt werden können.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 5.

Erfindungsgemäß wird ein Betriebsverfahren der eingangs genannten Art dadurch ausgestaltet, dass die numerische Steuerung die Bearbeitungskraft dadurch berücksichtigt, dass sie die geometrische Abmessung des Bearbeitungswerkzeugs während der Bearbeitung dynamisch und in Echtzeit in Abhängigkeit von der Bearbeitungskraft variiert.

Diese Vorgehensweise vereinfacht zunächst den Lernschnitt. Denn der Lernschnitt muss zwar - ebenso wie bei der DE 10 2017 206 931 A1 - für jedes Bearbeitungswerkzeug durchgeführt werden. Es muss aber lediglich ein einzelner Zusammenhang für die Abhängigkeit der geometrischen Abmessungen von der Bearbeitungskraft ermittelt werden. Hingegen ist keine Ermittlung von derartigen Zusammenhängen einzeln für die lagegeregelten Achsen erforderlich.

Auch der spätere Betrieb der Werkzeugmaschine ist - aus Sicht der numerischen Steuerung - erheblich einfacher. Denn es muss lediglich die geometrische Abmessung des Bearbeitungswerkzeugs variiert werden. Der zugehörige Einfluss auf die Steuerbefehle für die einzelnen lagegeregelten Achsen ergibt sich, ausgehend von der variierten geometrischen Abmessung des Bearbeitungswerkzeugs, von selbst.

Die für die Bearbeitungskraft charakteristischen Istgrößen können messtechnisch erfasst sein. Alternativ können die Istgrößen auch ermittelt sein. Beispiele werden nachstehend in Verbindung mit den bevorzugten Ausgestaltungen erläutert.

Besonders einfach und zuverlässig arbeitet das erfindungsgemäße Betriebsverfahren, wenn das Bearbeitungswerkzeug als Fräser ausgebildet ist, so dass die Bearbeitung des Werkstücks durch das Bearbeitungswerkzeug ein Fräsen ist. In diesem Fall ist die geometrische Abmessung des Bearbeitungswerkzeugs ein Fräserradius des Fräsers, und die numerische Steuerung muss lediglich den Fräserradius in Abhängigkeit von der Bearbeitungskraft variieren.

Oftmals arbeitet das erfindungsgemäße Betriebsverfahren im Falle eines Fräsers nur zuverlässig, wenn die Bearbeitung des Werkstücks durch den Fräser im Gleichlauf erfolgt. Dies kann jedoch ohne weiteres gewährleistet werden. Der Begriff "Gleichlauf" hat für den Fachmann eine fest umrissene Bedeutung.

Die für die Bearbeitungskraft charakteristischen Istgrößen können beim Fräsen einen Stromwert umfassen, mit dem ein den Fräser rotierender Spindelantrieb der Werkzeugmaschine beaufschlagt wird. Der Stromwert kann mittels eines Stromsensors messtechnisch erfasst werden. Alternativ kann der Stromwert auch ermittelt werden. Insbesondere kann es sich im Falle einer Ermittlung um den Sollstrom handeln, mit dem der Spindelantrieb beaufschlagt werden soll. Der Stromwert kann, soweit erforderlich, auf verschiedene Art und Weise vorverarbeitet werden. Beispielsweise kann nur ein momentbildender Strom verwertet werden und/oder kann der Stromwert um einen Offset korrigiert werden. Die entsprechenden Vorgehensweisen sind als solche aus der DE 10 2017 206 931 A1 bekannt.

Das erfindungsgemäße Betriebsverfahren ist nicht auf ein Fräsen beschränkt. Alternativ kann das Bearbeitungswerkzeug beispielsweise als Drehstahl ausgebildet sein, so dass die Bearbeitung des Werkstücks durch das Bearbeitungswerkzeug ein Drehen (englisch: lathing) ist. In diesem Fall ist die geometrische Abmessung des Bearbeitungswerkzeugs eine Länge des Drehstahls, und die numerische Steuerung muss lediglich die Länge des Drehstahls in Abhängigkeit von der Bearbeitungskraft variieren.

Die für die Bearbeitungskraft charakteristischen Istgrößen können beim Drehen einen Stromwert umfassen, mit dem ein das Werkstück rotierender Spindelantrieb der Werkzeugmaschine beaufschlagt wird. Der Stromwert kann mittels eines Stromsensors messtechnisch erfasst werden oder auch ermittelt werden. Die obenstehenden Ausführungen für den Fall eines Fräsers sind in analoger Weise anwendbar. Dies gilt auch für die gegebenenfalls erforderlichen Vorverarbeitungen des Stromwertes.

Das erfindungsgemäße Betriebsverfahren kann auch bei anderen Bearbeitungsvorgängen eingesetzt werden, beispielsweise beim Schleifen mittels eines Schleifwerkzeugs.

Die Aufgabe wird weiterhin durch ein Steuerprogramm mit den Merkmalen des Anspruchs 6 gelöst. Erfindungsgemäß bewirkt die Abarbeitung des Steuerprogramms durch die numerische Steuerung, dass die numerische Steuerung ein erfindungsgemäßes Betriebsverfahren ausführt.

Die Aufgabe wird weiterhin durch eine numerische Steuerung mit den Merkmalen des Anspruchs 7 gelöst. Erfindungsgemäß ist die numerische Steuerung mit einem erfindungsgemäßen Steuerprogramm programmiert, so dass die numerische Steuerung ein erfindungsgemäßes Betriebsverfahren ausführt.

Die Aufgabe wird weiterhin durch eine Werkzeugmaschine mit den Merkmalen des Anspruchs 8 gelöst. Erfindungsgemäß ist bei einer Werkzeugmaschine der eingangs genannten Art die numerische Steuerung als erfindungsgemäße numerische Steuerung ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine erste Ausgestaltung einer Werkzeugmaschine,
- FIG 2: eine zweite Ausgestaltung einer Werkzeugmaschine,
- FIG 3: ein Ablaufdiagramm,
- FIG 4: einen Verlauf einer Bearbeitungskraft,
- FIG 5: einen korrespondierenden Verlauf einer geometrischen Abmessung,
- FIG 6: eine Abdrängung eines Bearbeitungswerkzeugs,
- FIG 7: einen weiteren Verlauf einer Bearbeitungskraft und
- FIG 8: einen korrespondierenden Verlauf einer geometrischen Abmessung.

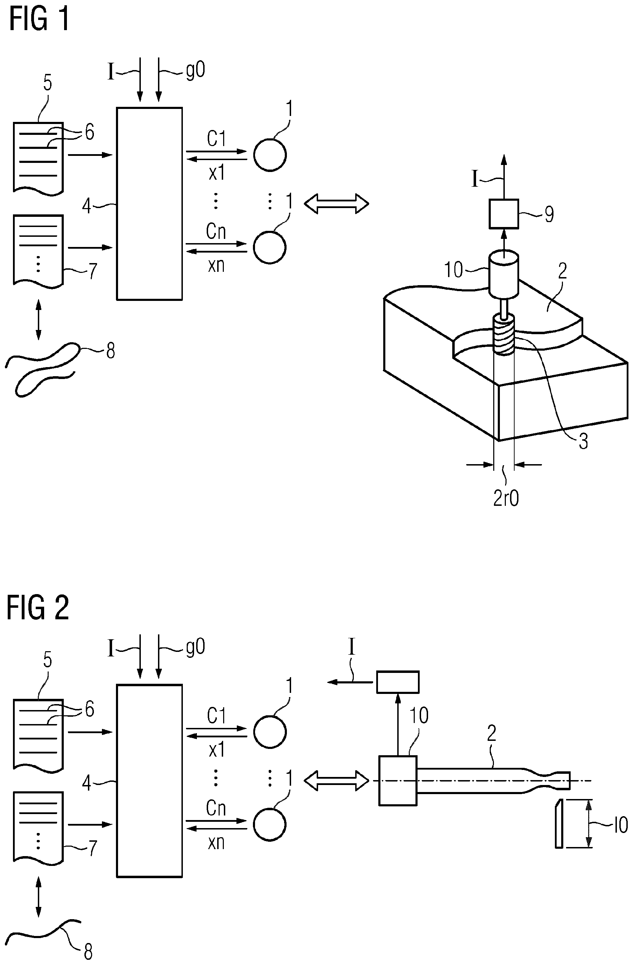

Gemäß den FIG 1 und 2 weist eine Werkzeugmaschine eine Anzahl n von lagegeregelten Achsen 1 auf. Die Anzahl n an lagegeregelten Achsen 1 kann nach Bedarf bestimmt sein. Minimal liegt die Anzahl n bei 1. Meist ist die Anzahl n an lagegeregelten Achsen 1 jedoch größer als 1. In der Werkzeugmaschine ist ein Werkstück 2 gehalten (eingespannt). Das Werkstück 2 soll in der Werkzeugmaschine mittels eines Bearbeitungswerkzeugs 3 der Werkzeugmaschine materialabtragend bearbeitet werden.

Die Werkzeugmaschine weist weiterhin eine numerische Steuerung 4 auf. Die numerische Steuerung 4 ist mit den lagegeregelten Achsen 1 verbunden. Die Verbindung der numerischen Steuerung 4 mit den lagegeregelten Achsen 1 dient einerseits dazu, Steuersignale Ci (i = 1, 2, ..., n) an die lagegeregelten Achsen 1 auszugeben. Andererseits dient die Verbindung der numerischen Steuerung 4 mit den lagegeregelten Achsen 1 dazu, von den lagegeregelten Achsen 1 jeweilige Lageistwerte xi (i = 1, 2, ... n) entgegenzunehmen. Im Ergebnis werden die lagegeregelten Achsen 1 dadurch von der numerischen Steuerung 4 gesteuert. Durch die entsprechende Ansteuerung der lagegeregelten Achsen 1 wird das Bearbeitungswerkzeug 3 von der numerischen Steuerung 4 relativ zum Werkstück 2 lagegeregelt verfahren.

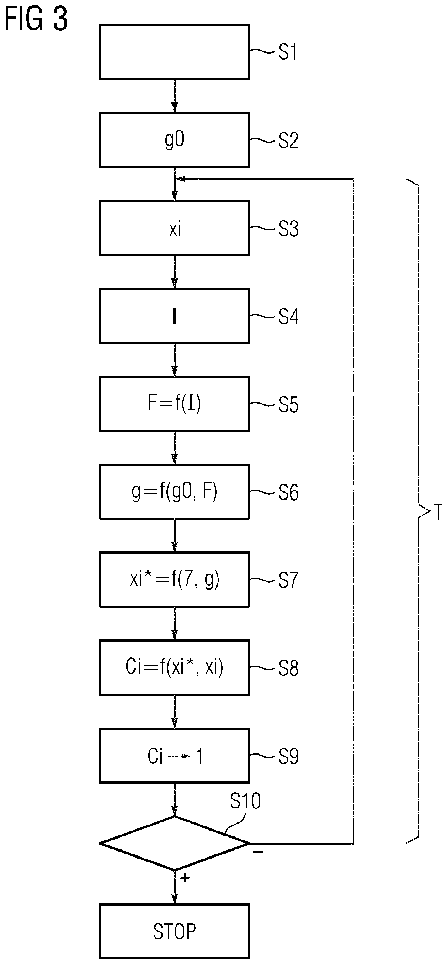

Die numerische Steuerung 4 ist mit einem Steuerprogramm 5 (Systemprogramm) programmiert. Das Steuerprogramm 5 umfasst Maschinencode 6, der von der numerischen Steuerung 4 abarbeitbar ist. Die Abarbeitung des Maschinencodes 6 durch die numerische Steuerung 4 bewirkt, dass die numerische Steuerung 4 ein Betriebsverfahren ausführt, das nachstehend in Verbindung mit FIG 3 näher erläutert wird.

Gemäß FIG 3 nimmt die numerische Steuerung 4 in einem Schritt S1 ein Teileprogramm 7 (Nutzprogramm) entgegen. Das Teileprogramm 7 legt entsprechend der schematischen Darstellung in FIG 1 eine Bahn 8 fest, entlang derer das Werkstück 2 mittels des Bearbeitungswerkzeugs 3 materialabtragend bearbeitet werden soll.

In einem Schritt S2 wird der numerischen Steuerung 4 eine geometrische Basisabmessung g0 des Bearbeitungswerkzeugs 3 bekannt. Im Falle der Ausgestaltung der Werkzeugmaschine gemäß FIG 1, bei welcher das Bearbeitungswerkzeug 3 als Fräser ausgebildet ist und demzufolge die Bearbeitung des Werkstücks 2 durch das Bearbeitungswerkzeug 3 ein Fräsen ist, ist die geometrische Basisabmessung g0 ein anfänglicher Fräserradius r0 des Fräsers. Beim Fräsen liegt die Anzahl n an lagegeregelten Achsen 1 meist bei 3 oder darüber. Im Falle der Ausgestaltung der Werkzeugmaschine gemäß FIG 2, bei welcher das Bearbeitungswerkzeug 3 als Drehstahl ausgebildet ist und demzufolge die Bearbeitung des Werkstücks 2 durch das Bearbeitungswerkzeug 3 ein Drehen ist, ist die geometrische Basisabmessung g0 eine anfängliche Drehstahllänge 10 des Drehstahls. Beim Drehen liegt die Anzahl n an lagegeregelten Achsen 1 meist bei 2 oder darüber.

Die Schritte S1 und S2 müssen jeweils nur dann ausgeführt werden, wenn sich diesbezügliche Änderungen ergeben, wenn also beispielsweise das Teileprogramm 7 geändert wird oder das Bearbeitungswerkzeug 3 gewechselt wird. Ein Schritt S3 und auf den Schritt S3 folgende Schritte S4 bis S10 hingegen realisieren die für die Bearbeitung des Werkstücks 2 durch das Bearbeitungswerkzeug 3 erforderliche Ansteuerung der lagegeregelten Achsen 1. Die Schritte S3 bis S10 werden von der numerischen Steuerung 4 mit einem Lageregeltakt T zyklisch immer wieder ausgeführt. Der Lageregeltakt T liegt meist unter 1 ms, beispielsweise bei 125 µs oder 250 µs. Die genannten Zahlenwerte sind rein beispielhaft.

Im Schritt S3 nimmt die numerische Steuerung 4 von den lagegeregelten Achsen 1 deren jeweilige Lageistwerte xi entgegen. Im Schritt S4 nimmt die numerische Steuerung 4 von einer Einrichtung 9 der Werkzeugmaschine eine Anzahl von Istgrößen I entgegen. Die numerische Steuerung 4 ist - zumindest zu diesem Zweck - mit der Einrichtung 9 (siehe die FIG 1 und 2) verbunden. Unabhängig von der Anzahl und Art der Istgrößen I sind die Istgrößen I derart bestimmt, dass sie für eine Bearbeitungskraft F charakteristisch sind, die von dem Werkstück 2 auf das Bearbeitungswerkzeug 3 ausgeübt wird, während das Werkstück 2 durch das Bearbeitungswerkzeug 3 bearbeitet wird. Da der Schritt S4 in die zyklische Abarbeitung der Schritte S3 bis S10 eingebunden ist, erfolgt das Entgegennehmen der Istgrößen I während der Bearbeitung des Werkstücks 2 durch das Bearbeitungswerkzeug 3 und in Echtzeit. Die Istgrößen I werden von der Einrichtung 9 entweder messtechnisch erfasst oder von ihr rechnerisch ermittelt. Eine rechnerische Ermittlung kann auf vorgegebenen und/oder auf messtechnisch erfassten Größen basieren.

Die Istgrößen I können insbesondere einen Stromwert (Sollwert oder Istwert) umfassen, mit dem ein Spindelantrieb 10 der Werkzeugmaschine (siehe die FIG 1 und 2) beaufschlagt wird. Im Falle der Ausgestaltung der Werkzeugmaschine gemäß FIG 1 (Bearbeitungswerkzeug 3 als Fräser ausgebildet) wird mittels des Spindelantriebs 10 der Fräser rotiert. Im Falle der Ausgestaltung der Werkzeugmaschine gemäß FIG 2 (Bearbeitungswerkzeug 3 als Drehstahl ausgebildet) wird mittels des Spindelantriebs 10 das Werkstück 2 rotiert.

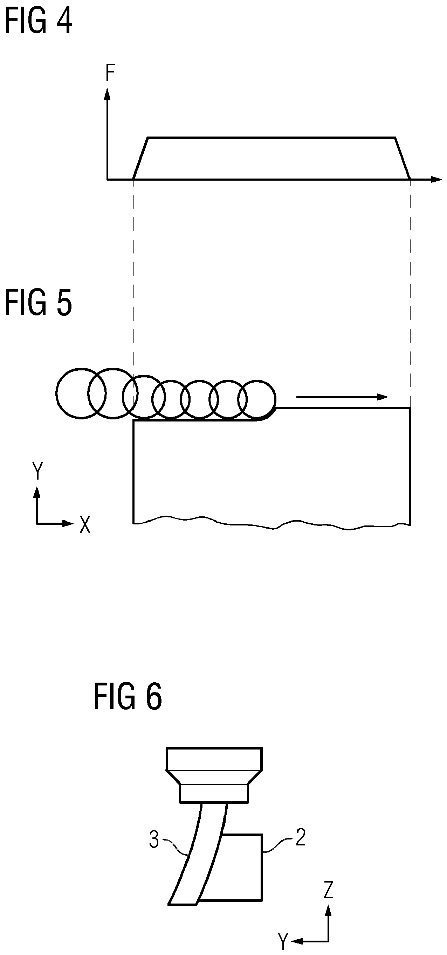

Im Schritt S5 ermittelt die numerische Steuerung 4 anhand der Istgrößen I die Bearbeitungskraft F. Im Schritt S6 variiert die numerische Steuerung 4 in Abhängigkeit von der Bearbeitungskraft F eine geometrische Abmessung g des Bearbeitungswerkzeugs 3. Dieses Variieren erfolgt aufgrund der Einbindung des Schrittes S6 in die Abfolge der Schritte S3 bis S10 dynamisch und in Echtzeit während der Bearbeitung des Werkstücks 2 durch das Bearbeitungswerkzeug 3. Beispielsweise kann die numerische Steuerung 4 im Schritt S6 zunächst einen Korrekturwert δg ermitteln und sodann die geometrische Abmessung g durch Addieren der geometrischen Basisabmessung g0 und des Korrekturwerts δg ermitteln. Im Falle der Ausgestaltung der Werkzeugmaschine gemäß FIG 1 (Bearbeitungswerkzeug 3 als Fräser ausgebildet) wird also der Fräserradius des Fräsers variiert. Im Falle der Ausgestaltung der Werkzeugmaschine gemäß FIG 2 (Bearbeitungswerkzeug 3 als Drehstahl ausgebildet) wird hingegen die Drehstahllänge des Drehstahls variiert. Die FIG 4 und 5 zeigen rein beispielhaft für einen einfachen Fall (Bearbeitungswerkzeug 3 als Fräser ausgebildet, Verfahrbewegung in X-Richtung, Orientierung des Fräsers vom Ansatz her parallel zur Z-Richtung) den Verlauf der Bearbeitungskraft F und der geometrischen Abmessung g, hier des wirksamen Fräserradius. FIG 6 zeigt weiterhin schematisch und deutlich übertrieben die durch die Bearbeitungskraft F bewirkte Abdrängung des Bearbeitungswerkzeugs 3.

Im Schritt S7 ermittelt die numerische Steuerung 4 Lagesollwerte xi* (i = 1, 2, ..., n) für die lagegeregelten Achsen 1. Die Ermittlung der Lagesollwerte xi* erfolgt unter Verwertung des Teileprogramms und der geometrischen Abmessung g, wie sie im Schritt S6 ermittelt wurde. Die Ermittlung der Lagesollwerte xi* erfolgt - eine entsprechende Ansteuerung der lagegeregelten Achsen 1 vorausgesetzt - derart, dass das Werkstück 2 durch das Bearbeitungswerkzeug 3 entlang der durch das Teileprogramm 7 festgelegten Bahn 8 materialabtragend bearbeitet wird.

Im Schritt S8 ermittelt die numerische Steuerung 4 anhand der Lagesollwerte xi* und der Lageistwerte xi der lagegeregelten Achsen 1 die Steuersignale Ci für die lagegeregelten Achsen 1. Die Steuersignale Ci können beispielsweise Drehzahlsollwerte oder Stromsollwerte oder eine Kombination derartiger Sollwerte sein. Im Schritt S9 steuert die numerische Steuerung 4 die lagegeregelten Achsen 1 entsprechend den ermittelten Steuersignalen Ci an. Dadurch wird das Bearbeitungswerkzeug 3 relativ zum Werkstück 2 entsprechend lagegeregelt verfahren.

Im Schritt S10 prüft die numerische Steuerung 4, ob das Teileprogramm 7 vollständig abgearbeitet ist. Wenn dies nicht der Fall ist, geht die numerische Steuerung 4 zum Schritt S3 zurück, wobei im Schritt S7 die Lagesollwerte xi* entsprechend dem Fortschritt bei der Abarbeitung des Teileprogramms 7 immer wieder neu ermittelt werden. Anderenfalls ist die Vorgehensweise von FIG 3 abgeschlossen.

Um die erfindungsgemäße dynamische Variierung der geometrischen Abmessung g vornehmen zu können, muss der numerischen Steuerung 4 die entsprechende Abhängigkeit von der Bearbeitungskraft F bekannt sein. Diese Abhängigkeit kann beispielsweise vorab einmalig ermittelt werden und sodann in der numerischen Steuerung 4 abgespeichert werden. Es sind jedoch auch andere Vorgehensweisen möglich. Im einfachsten Fall besteht eine rein lineare Abhängigkeit, so dass der Korrekturwert δg proportional zur Bearbeitungskraft F ist. Es sind jedoch auch andere Abhängigkeiten möglich.

Zusammengefasst betrifft die vorliegende Erfindung somit folgenden Sachverhalt:
Eine numerische Steuerung 4 einer Werkzeugmaschine nimmt ein Teileprogramm 7 entgegen, das eine Bahn 8 festlegt, entlang derer ein Werkstück 2 materialabtragend bearbeitet werden soll. Die numerische Steuerung 4 ermittelt für eine Anzahl von lagegeregelten Achsen 1 der Werkzeugmaschine, mittels derer ein Bearbeitungswerkzeug 3 der Werkzeugmaschine relativ zum Werkstück 1 lagegeregelt verfahren wird, unter Verwertung des Teileprogramms 7 Steuerbefehle Ci und steuert die lagegeregelten Achsen 1 entsprechend den ermittelten Steuerbefehlen Ci an. Die numerische Steuerung 4 ermittelt die Steuerbefehle Ci derart, dass das Werkstück 2 entlang der durch das Teileprogramm 7 festgelegten Bahn 8 materialabtragend bearbeitet wird. Die numerische Steuerung 4 nimmt während der Bearbeitung des Werkstücks 2 durch das Bearbeitungswerkzeug 3 in Echtzeit für eine während der Bearbeitung des Werkstücks 2 durch das Bearbeitungswerkzeug 3 von dem Werkstück 2 auf das Bearbeitungswerkzeug 3 ausgeübte Bearbeitungskraft F charakteristische Istgrößen I entgegen. Die numerische Steuerung 4 berücksichtigt bei der Ermittlung der Steuerbefehle Ci eine geometrische Abmessung g des Bearbeitungswerkzeugs 3 und die Bearbeitungskraft F. Die Berücksichtigung der Bearbeitungskraft F erfolgt dadurch, dass die geometrische Abmessung g des Bearbeitungswerkzeugs 3 während der Bearbeitung dynamisch und in Echtzeit in Abhängigkeit von der Bearbeitungskraft F variiert wird.

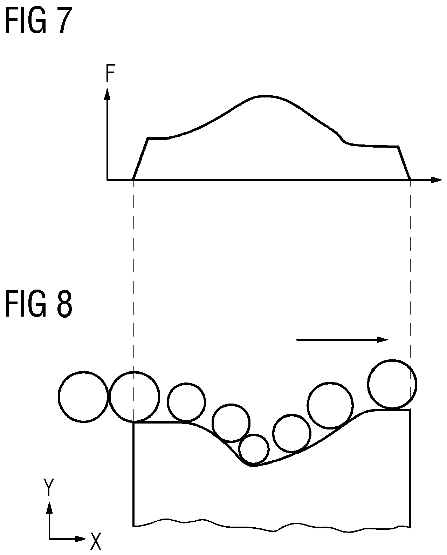

Die vorliegende Erfindung weist viele Vorteile auf. Insbesondere ist auch eine Anwendung des Betriebsverfahrens bei der Bearbeitung einer freien Kontur ohne weiteres möglich. Denn es muss keine Rückberechnung der Bearbeitungskraft F auf die einzelnen lagegeregelten Achsen 1 vorgenommen werden. Auch ist keine Interpretation der Kraftrichtung pro lagegeregelter Achse 1 erforderlich. Durch die Korrektur der geometrischen Abmessung g kann dies erheblich einfacher erfolgen. Die FIG 7 und 8 zeigen rein beispielhaft für einen zu den FIG 4 und 5 analogen Fall (Bearbeitungswerkzeug 3 als Fräser ausgebildet, Orientierung des Fräsers vom Ansatz her parallel zur Z-Richtung) für eine freie Kontur (Bewegung des Fräsers sowohl in X-Richtung als auch in Y-Richtung) den Verlauf der Bearbeitungskraft F und der geometrischen Abmessung g, hier des wirksamen Fräserradius. Weiterhin ist das erfindungsgemäße Betriebsverfahren auch bei anderen Bearbeitungstechnologien einsetzbar, beispielsweise beim Schleifen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Werkzeugmaschine,
- wobei eine numerische Steuerung (4) der Werkzeugmaschine ein Teileprogramm (7) entgegennimmt, das eine Bahn (8) festlegt, entlang derer ein Werkstück (2) materialabtragend bearbeitet werden soll,
- wobei die numerische Steuerung (4) für eine Anzahl von lagegeregelten Achsen (1) der Werkzeugmaschine, mittels derer ein Bearbeitungswerkzeug (3) der Werkzeugmaschine relativ zum Werkstück (1) lagegeregelt verfahren wird, unter Verwertung des Teileprogramms (7) Steuerbefehle (Ci) ermittelt und die lagegeregelten Achsen (1) entsprechend den ermittelten Steuerbefehlen (Ci) ansteuert,
- wobei die numerische Steuerung (4) die Steuerbefehle (Ci) derart ermittelt, dass das Werkstück (2) entlang der durch das Teileprogramm (7) festgelegten Bahn (8) materialabtragend bearbeitet wird,
- wobei die numerische Steuerung (4) während der Bearbeitung des Werkstücks (2) durch das Bearbeitungswerkzeug (3) in Echtzeit eine Anzahl von für eine während der Bearbeitung des Werkstücks (2) durch das Bearbeitungswerkzeug (3) von dem Werkstück (2) auf das Bearbeitungswerkzeug (3) ausgeübte Bearbeitungskraft (F) charakteristischen Istgrößen (I) entgegennimmt,
- wobei die numerische Steuerung (4) bei der Ermittlung der Steuerbefehle (Ci) eine geometrische Abmessung (g) des Bearbeitungswerkzeugs (3) und die Bearbeitungskraft (F) berücksichtigt,
**dadurch gekennzeichnet,**
**dass** die numerische Steuerung (4) die Bearbeitungskraft (F) dadurch berücksichtigt, dass sie die geometrische Abmessung (g) des Bearbeitungswerkzeugs (3) während der Bearbeitung dynamisch und in Echtzeit in Abhängigkeit von der Bearbeitungskraft (F) variiert.

2. Betriebsverfahren nach Anspruch 1,
**dadurch gekennzeichnet,**
**dass** das Bearbeitungswerkzeug (3) als Fräser ausgebildet ist, so dass die Bearbeitung des Werkstücks (2) durch das Bearbeitungswerkzeug (3) ein Fräsen ist, und dass die geometrische Abmessung (g) des Bearbeitungswerkzeugs (3) ein Fräserradius des Fräsers ist.

3. Betriebsverfahren nach Anspruch 2,
**dadurch gekennzeichnet,**
**dass** die für die Bearbeitungskraft (F) charakteristischen Istgrößen (I) einen Stromwert umfassen, mit dem ein den Fräser rotierender Spindelantrieb (10) der Werkzeugmaschine beaufschlagt wird.

4. Betriebsverfahren nach Anspruch 1,
**dadurch gekennzeichnet,**
**dass** das Bearbeitungswerkzeug (3) als Drehstahl ausgebildet ist, so dass die Bearbeitung des Werkstücks (2) durch das Bearbeitungswerkzeug (3) ein Drehen ist, und dass die geometrische Abmessung (g) des Bearbeitungswerkzeugs (3) eine Länge des Drehstahls ist.

5. Betriebsverfahren nach Anspruch 4,
**dadurch gekennzeichnet,**
**dass** die für die Bearbeitungskraft (F) charakteristischen Istgrößen (I) einen Stromwert umfassen, mit dem ein das Werkstück (2) rotierender Spindelantrieb (10) der Werkzeugmaschine beaufschlagt wird.

6. Steuerprogramm für eine numerische Steuerung (4), wobei das Steuerprogramm Maschinencode (6) umfasst, dessen Abarbeitung durch die numerische Steuerung (4) bewirkt, dass die numerische Steuerung (4) ein Betriebsverfahren nach einem der obigen Ansprüche ausführt.

7. Numerische Steuerung, die mit einem Steuerprogramm (5) nach Anspruch 6 programmiert ist, so dass sie im Betrieb ein Betriebsverfahren nach einem der Ansprüche 1 bis 5 ausführt.

8. Werkzeugmaschine,
- wobei die Werkzeugmaschine eine numerische Steuerung (4) aufweist, von der ein Teileprogramm (7) entgegennehmbar ist, das eine Bahn (8) festlegt, entlang derer ein Werkstück (2) materialabtragend bearbeitet werden soll,
- wobei die Werkzeugmaschine eine Anzahl von lagegeregelten Achsen (1) aufweist, mittels derer ein Bearbeitungswerkzeug (3) der Werkzeugmaschine relativ zum Werkstück (2) lagegeregelt verfahrbar ist,
- wobei die numerische Steuerung (4) mit den lagegeregelten Achsen (1) zur Vorgabe von Steuerbefehlen (Ci) an die lagegeregelten Achsen (1) verbunden ist,
- wobei die Werkzeugmaschine eine Einrichtung (9) aufweist, von der während der Bearbeitung des Werkstücks (2) durch das Bearbeitungswerkzeug (3) eine Anzahl von für eine während der Bearbeitung des Werkstücks (2) durch das Bearbeitungswerkzeug (3) von dem Werkstück (2) auf das Bearbeitungswerkzeug (3) ausgeübte Bearbeitungskraft (F) charakteristischen Istgrößen (I) erfassbar oder ermittelbar ist,
- wobei die numerische Steuerung (4) mit der Einrichtung (9) zur Entgegennahme der Istgrößen (I) verbunden ist,
**dadurch gekennzeichnet,**
**dass** die numerische Steuerung (4) als numerische Steuerung nach Anspruch 7 ausgebildet ist.
